# EUROPEAN PATENT SPECIFICATION

(11) **EP 0 891 450 B1**
(45) Date of publication and mention of the grant of the patent: **04.10.2006**
(21) Application number: 97912905.3
(22) Date of filing: 24.10.1997
(51) Int. Cl.: E01F 9/04

(54) **RAISED PAVEMENT MARKER THAT USES PRESSURE SENSITIVE ADHESIVE**
ERHÖHTE STRASSENBELAGSMARKIERUNG, DIE HAFTKLEBSTOFF VERWENDET
MARQUAGE DE REVETEMENT DE LA CHAUSSEE PROFILE UTILISANT UN ADHESIF SENSIBLE A LA PRESSION

(30) Priority: 04.12.1996 US 760356; 24.06.1997 US 881652
(43) Date of publication of application: 20.01.1999
(73) Proprietor: MINNESOTA MINING AND MANUFACTURING COMPANY, St. Paul, Minnesota 55133-3427 (US)
(72) Inventor: KHIEU, Sithya, S., Saint Paul, MN 55133-3427 (US); MIRON, Gary, R., Saint Paul, MN 55133-3427 (US); THAKKAR, Bimal, V., Saint Paul, MN 55133-3427 (US)
(74) Representative: Vossius & Partner
(86) International application number: PCT/US1997/019267
(87) International publication number: WO 1998/024978

(56) References cited:
- EP-A- 0 125 785
- EP-A- 0 279 204
- WO-A-92/15756
- US-A- 5 374 465
- US-A- 5 667 335

## Description

This invention pertains to durable raised pavement marker that is adhered to the pavement surface using a pressure-sensitive adhesive (see e.g. document WO-A-92/15756).

Raised pavement markers are commonly used as highway traffic markings that provide road lane delineation. The raised markers allow drivers of oncoming vehicles to correctly position themselves on the roadway, particularly at night or under conditions of poor visibility. Raised markers have the advantage of providing enhanced visibility, particularly when they incorporate retroreflective materials, and of also providing an audible signal to the driver when their automobile strays beyond the delineated area.

Raised pavement markers have been adhered to pavement surfaces using an asphalt or an epoxy type adhesive. Both of these adhesive systems, however, have certain drawbacks. For example, the bituminous asphalt type adhesive is cumbersome to apply and exposes workers to dangers involved with hot asphalt. The epoxy resin type adhesives require precise mixing and careful application of the materials and therefore can also be inefficient to provide adequate care for bond making.

Pressure-sensitive adhesives (PSAs) have been used in some pavement marking applications. PSAs, for example, have been used with durable pavement marking tapes and other such products (see e.g. U.S. Patent Application 08/760,356, filed December 4, 1996, this application relates to the later published applications US 2002/0004135 and US 2003/0091815). While there have been attempts to use PSAs for adhesion of raised pavement markers to roadway surfaces, these attempts have not been completely successful. Temporary raised pavement markers that are generally made of elastomeric or rubbery materials have been adhered to roadway surfaces for periods of about 3 to 6 months. For such markers, the adhesive pad is generally placed on one surface of the "L" shaped marker. When the marker is hit by a tire, the elastomeric material collapses and then bounces back up when the vehicle has passed. These markers are generally used in construction work areas where long term adhesion is not required. Examples of this type of marker are disclosed in U.S. Patent Nos. U.S. 4,521,129, U.S. 4,534,673, U.S. 5,460,115 and U.S. 4,626,127. WO92/15756 discloses a pavement marker comprising a marking member having an upper surface useful as a pavement marking indicium and a lower surface; and a bottom layer of polyorganosiloxane pressure-sensitive adhesive in intimate contact with said lower surface.

Attempts to use a butyl rubber type adhesive for adhering durable raised pavement markers to road surfaces have encountered difficulties. One successful application has been where durable markers are used for special marking purposes. Normally, this special use marker is placed in the middle of the road where it does not get hit by vehicles. If a durable raised pavement marker could be adhered to a road surface for long periods of time using a pressure-sensitive adhesive, it would provide great advantages in convenience, safety, and efficiency of application.

We have discovered pressure-sensitive adhesive systems that can be used to durably adhere raised pavement markers to pavement surfaces. These pressure-sensitive adhesives (PSAs) share particular shear modulus properties at various impact frequencies that correspond to the impact of a tire on the marker. In brief summary, the present invention provides a raised pavement marker that comprises: (a) a pavement marker body having upper and lower surfaces and an apparent flexural modulus of at least about 50,000 PSI (3.45 x 10⁸ (Pascals) (Pa)) and (b) a pressure sensitive adhesive layer disposed upon the lower surface of the marker, wherein the adhesive has (i) a transition region that begins at a frequency of about 10,000 radians/s or more and extends to a frequency of about 100 radians/s or less at about 25 ° C; and (ii) a minimum shear modulus of about 1 x 10⁵ Pa at an impact frequency of about 100 radians/s at 25 °C; and (iii) a shear modulus value of about 1 x 10⁴ to 2 x 10⁵ Pa at a frequency of 1 radian per second (rad/sec) at 25 °C, wherein the pressure sensitive adhesive comprises: (i) about 40 to 60 wt-% polybutadiene; and (ii) about 40 to 60 wt-% tackifier; or: wherein the pressure sensitive adhesive comprises: (i) about 40 to 60 wt-% natural rubber; and (ii) about 40 to 60 wt-% tackifier.

Applicants have discovered that placing the above-recited pressure sensitive adhesive on the lower surface of the pavement marker body that the marker will have good initial adhesion to the road surface and can maintain that adhesion over an extended period of time after exposure to repeated impacts from motor vehicle tires.

The present invention overcomes the disadvantages associated with hot tar adhesives. There is no need for the contractor to wear gloves to protect themselves from the hot tar, and there is no need for heavy equipment including a tank, heater, pump, dispenser, and truck to haul these items.

The present invention also is advantageous over epoxy adhesives in that it does not require precision in mixing to achieve stochiometric ratios required for adequate bonding. In addition, there are no unreacted materials that need to be disposed of in an environmentally sound manner.

Applicants' PSA raised markers are readily applied and therefore improve worker safety by reducing exposure to traffic. Because the inventive PSA markers also are amenable to mechanical application with significantly less human involvement, there is still further improvement to worker safety. In short, the inventive raised pavement markers provide extraordinary benefits.
FIGURE 1 is a representative depiction of a master shear modulus curve.
FIGURES 2a-2d show the shear modulus master curves for various pressure-sensitive adhesives that are useful in the invention.

The durable raised pavement marker (DRPM) useful in the invention normally has a lifetime of at least about six months, preferably about 2-3 years, and has a substantially flat bottom. These types of markers generally have an apparent flexural modulus ranging from about 50,000 pounds per square inch (psi) (3.45 x 10⁸ Pa) to 200,000 psi (1.38 x 10⁹ Pa). The DRPM disclosed in WO 96/36770 and WO 96/36771, with an apparent modulus of at least about 80,000 psi (5.52 x 10⁸ Pa) is one example of a suitable durable marker. The flat bottom provides the marker with sufficient surface area for the application of a pressure-sensitive adhesive.

The apparent flexural modulus of the marker is a measurement of the marker's stiffness. This value can be obtained by testing the marker in a 3-point bending test as specified in ASTM D790. Higher apparent modulus numbers correspond to higher marker stiffness. Raised pavement markers used in the invention have an apparent flexural modulus of at least about 50,000 psi (3.45 x 10⁸ Pa). Preferably, the durable raised pavement marker has an apparent flexural modulus of about 150,000 psi (1.03 x 10⁹ Pa) to 200,000 psi (1.38 x 10⁹ Pa). For a further discussion of apparent flexural modulus, see U.S. Patent Application Nos. 08/445,285 filed May 19, 1995 (this application relates to the later published US Patent 6,126,360) and U.S. Patent 5,667,335.

The marker can be constructed as a one-piece molded article or as a multi-component article that may include retroreflective elements for improved visibility. If the marker has a multi-component construction, the top of the marker is made from a material having a high flexural modulus and the bottom or base of the marker is typically made from materials that have a high Youngs modulus. The Youngs modulus will generally range from about 2.07 x 10⁸ Pa to 3.45 x 10⁹ Pa. These high Youngs modulus values will generally prevent the base material from stretching which could lead to premature separation of the marker from the pavement surface. The multi-component construction allows for the marker to be designed so that the marker's properties can be adapted to the particular road conditions. For example, because the top portion of the marker is directly impacted by a vehicle's tires, the top material can be selected to have improved impact resistance by use of a less rigid material, and the base material can be selected to have a higher rigidity or high tensile modulus to compensate for the loss of rigidity in the shell material. The fact that the shell and base material are joined together in a single marker allows the marker as a whole to have the desired properties. Examples of pavement markers made that use this concept to provide desired apparent flexural modulus can be found in WO 96/36770.

Although the above-noted markers are preferred because they possess desired apparent flexural modulus, other markers may also be used in conjunction with the pressure sensitive adhesives that possess the parameters defined herein. Such markers may include, for example, those disclosed in the following U.S. patents: 3,332,327, 4,726,706, 5,082,715, 5,340,231, 5,403,115, 5,425,596 and 5,460,115.

The pressure-sensitive adhesive used in the marker of the invention provides good initial adhesion to the road upon application and maintains its adhesion to the road over time and upon exposure to multiple and repeated vehicle impacts. The adhesives found to be useful in durable raised pavement marker applications have particular shear modulus values at impact frequencies that correspond to the time under stress that the marker experiences when it is impacted on the road.

In a first embodiment of the invention, the durable, raised pavement marker comprises : (a) a pavement marker body having upper and lower surfaces and an apparent modulus of at least about 3.45 x 10⁸ Pa and (b) a pressure sensitive adhesive layer disposed upon the lower surface of the marker, wherein the adhesive comprises (i) about 40 to 60.wt-% polybutadiene and (ii) about 40 to 60 wt-% tackifier.

In a second embodiment of the invention, the pressure sensitive adhesive layer comprises (i) about 40 to 60 wt-% natural rubber and (ii) about 40 to 60 wt-% of a tackifier.

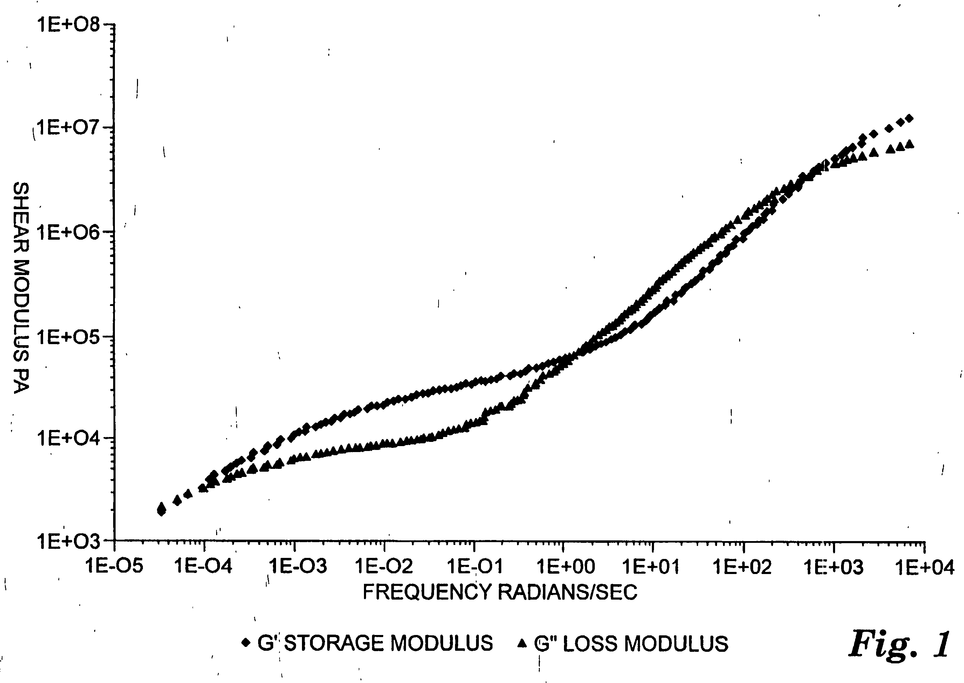

In general, the properties of the adhesives can be characterized by a shear modulus master curve that can be generated by a dynamic mechanical rheometer such as a Rheometrics RDA2 or a Bolin Vor using techniques discussed in detail in JD Ferry's Viscoelastic Properties of Polymers, 2d Ed., pp. 292-319. The curves generally have an elongated "S" shape. A representative, non-specific shear modulus curve is shown in Fig. 1. This curve does not depict the properties of any particular PSA but is used to illustrate the important features of the curve.

The two quantities plotted versus reduced frequency are G', the dynamic shear storage modulus (the component of stress in phase with strain) and G", the dynamic shear loss modulus (the component of stress 90° out of phase with strain).

Generally, for a typical pressure sensitive adhesive that is not fully crosslinked, three regions of mechanical response are readily accessible using this technique. These regions are:
a) a portion of the transition region (*i.e.,* the transition from glassy-like to rubbery-like behavior), where the viscoelastic response of the polymer in the adhesive is believed to be dominated by configurational changes between entanglement loci of the polymer chains. In this region, the material exhibits a strong modulus dependency on frequency and has perfectly elastic mechanical properties. A vehicle tire impacting the PSA marker in this region generally causes no permanent deformation in the PSA. A PSA having a relatively long transition region will provide a DRPM with good resistance to impact shear. Preferred PSAs have a transition region that extends to 0.01 second or longer (100 Rad/sec or less).
b) The plateau region, where viscoelastic behavior is believed to be the result of a combination of molecular chain rearrangements occurring between entanglement loci and also beyond entanglement sites. In this domain modulus of the polymer is less dependent on time.
c) The rubbery flow and flow region, where it is believed that very large scale molecular motions occur, resulting in the destruction and reformation of the polymer's entanglement network. The absence or presence of the flow region and its location on the frequency scale, it is believed, can greatly affect the long term adhesion of the markers to the road surface. In this region, the PSA flows and creeps around bits of aggregate and into cracks on the road to form a continuous bond with the surface. While not bound by any theory, we believe that this behavior can only occur if the PSA does not have a full three dimensional network. The PSAs used in the invention therefore are not completely cured, but receive only enough radiation exposure to form a stable PSA.

The exact shape of the modulus curve is determined by factors such as chain stiffness characteristics of the base polymer (including steric factors), molecular weight and molecular weight distribution of the polymer, the presence of tackifying resins or plasticizers in the adhesive and the degree of crosslinking. If the adhesive is crosslinked to such a degree that a fully developed three-dimensional network is present in the adhesive, it will not exhibit a rubbery flow region as depicted in Figure 1, but rather the shear moduli at very long times or very low frequencies will eventually attain an equilibrium value.

The position of the curve is dependent on the temperature at which the modulus data is taken. This temperature is called the "reference temperature". All the data presented herein are taken at a 25 °C reference temperature unless otherwise specified. If the reference temperature is lowered there will be a general horizontal shift of the "S" shape to the left on the frequency axis and if the reference temperature is increased there will be a general shift to the right. The shape of the curve is generally unaffected by changing reference temperature.

The properties of an adhesive under the conditions likely to be encountered in a durable raised pavement marking application can be generally characterized by determining the shear modulus of the adhesive at a variety of frequencies. For example, the modulus of the adhesive at frequencies of less than about 0.01 radians per second is indicative of the long term bond formation properties of the adhesive. Typical Modulus values in this range are generally 5 x 10⁴ to 1 x 10³ Pa. The tamping frequency is considered to be about 0.01 to 100 radians per second and includes the events of initial application of the marker to the road, vehicle traffic at speeds up to about 10 miles per hour and vehicles stopping momentarily on top of the marker. At the frequency of about 1 rad/sec the PSA preferably has a shear modulus of about 2 x 10⁴ to 1 x 10⁵ Pa. At about 100 rad/sec, the PSA preferably has a shear modulus of about 2 x 10⁵ Pa or greater, more preferably 5 x 10⁵ Pa or greater. Normal impact frequency is generally about 100 to 1000 radians per second and includes impacts generated by vehicles traveling at about 16 kilometers per hour (10 miles per hour) to greater than 145 kilometers per hour (90 miles per hour). Preferably, the PSA has a shear modulus of about 2 x 10⁵ to 5 x 10⁷ Pa in this region.

For the PSA to have all of the characteristics needed in a durable raised pavement marker, the transition region of its shear modulus curve should end at impact frequency below 100 rad/sec. In addition, the modulus curve in the frequency domain of less about 0.01 rad/sec preferably is sloping down, which is an indication of long term bond maintenance. A PSA having these properties will be able to form a strong initial bond to the roadway surface and maintain adhesion to the road under normal use conditions.

The pressure-sensitive adhesives useful in the invention have been found to have the above-mentioned shear modulus properties. There are generally three types of materials that can be readily used as base polymeric materials for the PSA. These polybutadiene; block copolymers of styrene and butadiene; and natural rubber. Some adhesives disclosed in U.S. Patent Application Serial Numbers 08/760,356 this application relates to the later published applications US 2002/0004135 and US 2003/0091815 and 08/489,135 (this application relates to the later published US Patent 5,906,889) may meet the criterion set out in this document for providing a PSA that allows a raised pavement marker to demonstrate extraordinary durability when adhered to a road.

The PSAs useful in the markers of the invention may contain a tackifier in an amount that is sufficient to give the adhesive the necessary bond forming and bond maintenance properties. While the exact amounts depend on the base elastomer and other materials used, the amount ranges from about 40 to 60 wt-% of the composition, based on the total composition weight.

Any of the known tackifiers may be used in the preparation of the PSA. Examples of useful types of tackifiers include the terpenes; terpene phenolics, hydrocarbon resins, and rosin esters. Suitable non-phenolic tackifiers include one or more abietic acid types such as abietic acid, neoabietic acid, palustric acid, dihydroabietic acid, tetrahydroabietic acid, dehydroabietic acid and their esters and pimaric acid types such as pimaric acid, isopimaric acid, dehydrated versions thereof, and their esters. The esters of pimaric acid and abietic acid type tackifiers are generally made by reacting the acid with a polyol such as pentaerythritol, glycerin, ethylene glycol, and so on. Commercially available examples of non-phenolic tackifiers include ESTER GUM 8D, HERCOFLEX 400 (both rosin esters), HERCOLYN D (a hydrogenated methyl ester), FORAL 85 (a hydrogenated glycerin rosin ester), ESTER R-95 (a pentaerythritol rosin ester) and FORAL 105 (a hydrogenated pentaerythritol rosin ester), all available from Hercules Chemical Co., Wilmington, DE.

Useful non-phenolic terpene tackifiers include the pinenes, such as α-pinene, β-pinene, limonene, and the like. Examples of such materials include the PICCOLYTE and PICCOFYN series of products, available from Hercules Chemical Co.

Suitable aliphatic resins include those derived from cis-piperylene, isoprene, 2-methylbutene, 2-dicyclopentadiene, and so on. Commercially available aliphatic resin tackifiers include WINGTOCK 10 and 95, available from the Goodyear Chemical Co., Akron, OH and ESCOREZ 1310 and 5300, available from the Exxon Chemical Co.

Examples of suitable aromatic resins include those derived from indene, styrene, methylindene, methylstyrene, and the like. The resins may be hydrogenated if desired for improved stability and/or compatibility. Commercially available versions include PICCOVAR AP-25 and REGALREZ 1094, both available from Hercules Chemical Co., and ESCOREZ 7105, available from Exxon Chemical Co.

Other ingredients can be included in the PSA so long as they do not adversely interfere with the adhesive's ability to bond to the road surface and to maintain adhesion to the road over time. Examples of additional ingredients include plasticizers, antioxidants, fillers, and the like. The amounts of such ingredients used can vary with the intended application and with the particular ingredients employed in the composition, provided that the resulting adhesive has the shear modulus characteristics described earlier.

The PSAs can be produced by known processes. A preferred process employs a continuous compounding device. A number of such devices are known, and can be a single unit or a series of units interconnected so as to continuously process the adhesive composition. The device should have a sequence of alternating, interconnected conveying and processing sections.

An example of a continuous compounding device useful to prepare the PSAs used in the invention is a twin screw extruder having a sequential series of conveying and processing zones. A plurality of input openings are preferably provided along the length of the extruder to facilitate the addition of various materials. Additions of material are made through the input ports to a partially full conveying zone or zones. A melt pump and filter may be present either as an integral part of the extruder, or as a separate unit to facilitate both the removal of the adhesive from the compounding device and the removal of unwanted contaminants from the adhesive stream.

In preparing the PSAs of the invention, the selected base elastomer is added to a first conveying zone of the compounding device at a controlled rate so that the elastomer does not completely fill the zone. The elastomer may be pelletized by grinding or extrusion pelletization prior to being fed to the compounding device. Alternately, it may be fed directly into the compounding device without grinding or pelletization using a device such as a Moriyama^{™} extruder. If the elastomer has been pelletized, it preferably is treated with a material such as talc to prevent agglomeration of the pellets.

The elastomer is then transported by the first conveying zone to a first processing zone where it is masticated. The first processing zone typically is designed to be essentially completely full and to masicate the elastomer. Additionally, the processing zone conveys the elastomer to the next zone. It may be desirable to provide the first processing zone as at least two discrete processing sections separated from each other by a transporting section. This permits the elastomer to be masticated in steps, with cooling of the masticated elastomer between each step.

If two or more elastomers are to be processed they can both be added to the first conveying zone and masticated in the first processing zone. Alternatively, the elastomers can be added sequentially to different conveying zones with sequential mastication after each elastomer addition. Sequential elastomer addition to different conveying zones can also be employed when a single elastomer is used.

Mastication is preferably carried out in the absence of materials that lubricate the elastomer. This does not, however, preclude the presence of small amounts of such materials, provided that the amount present does not effectively reduce the rate of mastication. Certain other solid adjuvants, such as talc, inorganic fillers, antioxidants, and the like, may be fed to the compounding device such that they are present during mastication.

The masticated elastomer then passes from-the first processing zone to a second conveying zone. As with the first conveying zone, the second conveying zone is not completely filled by the elastomer. Tackifier and other optional additives are fed to the second conveying zone. The resulting mixture is conveyed to the next processing zone where they are mixed to form a blend of the materials. A number of techniques can be used to feed these materials to the compounding device. For example, a constant rate feeder can be used to add solid materials. Heated pail unloaders, gear pumps, and other appropriate equipment for feeding liquids at a controlled rate can be used to feed the liquids to the compounding device. Additives present at low concentration can be pre-blended with one or more of the other components for more accurate addition.

Although substantially all mastication occurs in the first processing zone, there may be some mastication which occurs in subsequent processing of the elastomer through the compounding device. This additional mastication can occur in subsequent conveying or processing zones. In any event, the degree to which the elastomer must be masticated varies with each elastomer employed and the exact formulation of the adhesive. Generally, the elastomer must be sufficiently masticated to permit subsequently added tackifiers and any other adjuvants to be satisfactorily mixed into the elastomer to form a blend and permit the blend to be extruded as a stream that is essentially free from both rubber particles and from visually identifiable regions of unmixed tackifier or other adjuvants -- see U.S. Patent No. 5,539,033 to Bredahl.

Once the masticated elastomer, tackifier, and any other adjuvants have been formed into the blend, the composition is considered to be an adhesive. The adhesive typically has a viscosity at the processing temperature in the range from 50 Pa·s (500 Poise) to 500 Pa·s (5000 Poise) measured at a shear rate of 1000 sec⁻¹, although higher viscosities are possible. The processing temperature of the adhesive is typically in the range of 100 to 200 °C.

The butadiene homo- and co-polymer based PSAs are cured after formulation and before being placed on the marker to provide a partially cross-linked polymeric network. Although any appropriate curing method can be used, including chemical crosslinking and exposure to radiation, a preferred method is exposure to electron beam radiation. When an electron beam is used as the source of radiation, it is preferred to expose the adhesive to about 2 to 8 (Mrad) of radiation. The exact dose is determined by factors such as the elastomer used, the thickness of the layer of adhesive to be cured, and so on.

The PSA pads used with the durable raised pavement markers can be made with a pure adhesive pad or with a composite adhesive pad. The pure pad consists only of adhesive, while the composite pad is a sandwich construction consisting of a conformance material in the middle between two PSA layers.

A durable raised pavement marker that uses a pure adhesive pad can be made by a number of methods. For example, a small sheet of pure PSA can be made by laminating a thin film of PSA, from 0.65-10.4 g (10-160 grains) per 1.5 x 10⁻² m² (24 square inches) preferably 0.65-2.3 g (10-35 grains) per 1.5 x 10⁻² m² (24 square inches) onto a release liner, to achieve the desired thickness of about 2.0 to 3.2 mm (80 to 125 mil). The adhesive is cured, and the sheet is wound into rolls. The sheet is then slit into smaller rolls of any desired width. The rolls of adhesive can then be cut into pads. To make the pure pad PSA marker, the bottom of the marker is adhered to the pad on the side that has no liner. If the PSA has another liner laminated on top, one liner is peeled off before performing this step. The PSA pad can also be extruded directly onto the base of the marker if desired.

Markers using a composite pad can also be made in a number of ways. The PSAs and conformance layers are often available in roll form. The PSA is laminated to the top and bottom of the conformance layer. The sandwiched sheet or roll is then cut into pads to about the same dimension as the base of the markers. The sandwiched pads are adhered to the bases of the markers to complete the assembly of the PSA DRPMs.

Another way to prepare the composite pads for the PSA DRPMs uses both extrusion and lamination. The PSA is extruded onto a liner. The conformance layer is laminated to the adhesive. A second extruded PSA on a liner material is then laminated onto the other side of the conformance layer and the composite is wound into rolls. The finished roll will have PSAs that can be the same or different on both sides of the conformance layer. The rolls can then be cut to smaller widths as desired. Finally, the sandwiched pads can be cut and adhered to the bases of the markers to complete the PSA DRPM assembly.

Yet another way to make the PSA DRPMs is to extrude a first PSA film onto the base of the marker. The conformance layer is laminated to the PSA on the base of the marker, and a second coat of PSA applied on top of the conformance layer. A release liner can then be laminated on top of the PSA layer to prevent it from sticking onto itself. The PSA DRPM can then be made by cutting around the marker using a steel rule die, water jet, or laser cutting tool.

Because the butadiene homo- and co-polymer based PSAs used in the markers of the invention are relatively soft, they are preferably used in combination with a conformance layer to increase the bulk shear strength of the PSA. This conformance layer can be made of a rubbery material such as nitrile rubber combined with inorganic fillers, or a recycled material made using scraps and other materials left over from the manufacture of these layers. See U.S. Patent No. 4,988,541 to Hedblom.

The properties of the conformance layer materials can be characterized by force versus displacement curves of the type that would be generated if one ran the tensile test according to ASTM D790. The yield points of the conformance layers that have given us good field test results lie between about 13.3 to 31.1 Newtons (N). The recycled materials have yield points of about 13.3 N, and the virgin materials have yield points of about 31.1 N.

The thickness-of the PSA layer is an important consideration for the PSA DRPMs. And roughness of the road surface is an important factor for selecting the thickness of the PSA pad. For instance, if the exposed aggregate leaves gaps as deep as 12 mm in the pavement surface, then the PSA layer should be at least 12 millimeters (mm) thick in order for the PSA to completely contact the road surface: Fortunately, the majority of surfaces are fairly smooth such that PSA layer thicknesses of about 1 to 4 mm, preferably about 1.27-3.18 mm are sufficient for adhering the markers to the road surfaces. If necessary, multiple thin layers of PSA can be built up to the desired thickness. We have found that if air is entrapped in the PSA, the desired pad thickness can be achieved with less PSA. To achieve this effect, air can be injected into the molten PSA material during extrusion or a blowing agent can be incorporated in the PSA so that the extrusion process foams the PSA. The adhesive thickness can be varied for each side of a composite pad. For example, the PSA layer that adheres to the base of the marker can be about 0.1 to 0.4 mm thick, while the PSA layer that adheres to the road can be about 0.2 to 0.7 mm thick to accommodate non-uniform pavement surfaces.

The PSA durable raised pavement marker can be manufactured using a variety of different methods. For example, the adhesive can be provided in roll form with a release liner on one or both sides, the release liner is peeled off and the marker adhered to the pads in line. The individual markers can then be cut using a die-cut, a laser, or a water cut from the strip of adhesive/markers. The adhesive may be extruded directly onto the marker base if desired. Further, the adhesive pads may be provided with a release liner, the adhesives may be applied directly to the road surface and the marker then placed on top of the adhesive pad with application of suitable pressure. The method of application may be selected according to the use conditions, including the type of road surface, the geographical location, the temperature and weather conditions, and other factors known to those skilled in the art.

The invention is further described by reference to the following examples, which are understood to describe the invention but not limit it in any way rather its scope limit is defined by the appended claims.

Because many of the materials used in the formulations of the examples are commercially available products, the following table is provided for ease of identification of the components:

### GLOSSARY OF MATERIALS USED

| **Material** | **Description** | **Supplier** |
|---|---|---|
| Irganox 1010 | Antioxidant | CIBA ADDITIVES, Tarrytown, NY |
| Natural Rubber | | The Goodyear Tire & Rubber Company, Akron, OH |
| Piccolyte S-115 | B-pinene tackifier | Hercules Incorporated, Wilmington, DE |
| Acetobenzophenone | photoinitiator | |
| Exxon 3505 Polypropylene | | Exxon Chemical Company Polymers Group, Houston, TX |
| Foral 85 | C-5 hydrocarbon tackifier | Hercules Incorporated, Wilmington, DE |
| IOTG | photoinitator | Evans Chemetics, Waterloo. NY |
| Irgacure 651 | photoinitiator | CIBA ADDITIVES |
| KB-1 | photoinitiator | Sartomer Company, Inc., Exton, PA |
| Regalrez 1094, 1126, 6108 | hydrocarbon tackifier | Hercules Incorporated, Wilmington, DE |
| Tinuvin 622 | UV Stabilizer | Ciba Geigy, Inc. |
| Wingtack Plus | hydrocarbon tackifier | The Goodyear Tire & Rubber Company |
| XL-330, 353 | cross-linker | 3M Company, St. Paul MN |
| Piccolyte A135 | α-pinene tackifier | Hercules Incorporated |
| Escorez S1102 | C5 hydrocarbon tackifier | Exxon Chemical Company Polymers Group |

### Preparation of PSA Formulations

The following pressure-sensitive adhesive formulations were prepared by combining the listed ingredients at room temperature (25°C) and feeding through an extruder. All percentages are weight percentages based on the total weight of the composition.

| **Cpsn.** | **Ingredient** | **Wt-%** |
|---|---|---|
| **A** | Regalrez 1126 | 32.88 |
| | Polyoctene | 66.77 |
| | Tinuvin 622 | 0:10 |
| | Irganox B561 | 0.10 |
| | XL-353 | 0.15 |
| **B** | Regalrez 1094 | 39.86 |
| | Polyoctene | 59.79 |
| | Tinuvin 622 | 0.10 |
| | Irganox B561 | 0.10 |
| | XL-353 | 0.15 |
| **C** | Natural Rubber | 44.25 |
| | Piccolyte S-115 | 55.31 |
| | Irganox 1010 | 0.44 |
| **D** | Iso-octyl Acrylate | 63.15 |
| | Isobornyl Acrylate | 19.11 |
| | Acrylic Acid | 0.83 |
| | KB-1 | 0.17 |
| | XL-330 | 0.12 |
| | Regalrez 6108 | 16.62 |
| **E** | Iso-octyl Acrylate | 79.17 |
| | Isobornyl Acrylate | 3.96 |
| | Acrylic Acid | 0.20 |
| | Regalrez 6108 | 16.67 |
| | (cured by exposure to 5MRad of e-beam radiation) | |
| **F** | Iso-octyl Acrylate | 79.17 |
| | Isobornyl Acrylate | 3.96 |
| | Acrylic Acid | 0.20 |
| | Regalrez 6108 | 16.67 |
| | (cured by exposure to 7MRad of e-beam radiation) | |
| **G** | Iso-octyl Acrylate | 83.83 |
| | Acrylic Acid | 2.59 |
| | Foral 85 | 12.96 |
| | Irgacure 651 | 0.52 |
| | IOTG | 0.01 |
| | Acetobenzophenone | 0.08 |
| **H** | Iso-octyl Acrylate | 83.83 |
| | Acrylic Acid | 2.59 |
| | Foral 85 | 12.96 |
| | Irgacure 651 | 0.52 |
| | IOTG(chain transfer agent) | 0.01 |
| | Acetobenzophenone | 0.08 |
| **I** | Polyoctene | 58.37 |
| | Wingtack Plus | 31.43 |
| | Exxon 3505 Polypropylene | 5.39 |
| | Tinuvin 622 | 0.9 |
| | Irganox B561 | 0.9 |
| | Irganox 1010 | 0.90 |
| | Irgafos 168 | 3.59 |
| | t-Butylanthroquinone | 0.13 |
| **J** | Piccolyte A135 | 53.24 |
| | Irganox 1010 | 0.46 |
| | Butadiene | 46.29 |
| **K** | Piccolyte A135 | 53.24 |
| | Irganox 1010 | 0.46 |
| | Butadiene | 46.29 |
| **L** | Natural Rubber | 49.75 |
| | Piccolyte S-115 | 49.75 |
| | Irganox 1010 | 0.50 |
| **M** | Natural Rubber | 55.25 |
| | Piccolyte S-115 | 44.20 |
| | Irganox 1010 | 0.50 |
| **N** | Butadiene/SBR rubber in a 4/1 weight ratio | 38.76 |
| | Piccolyte A135/Escorez S1102 (4/1 weight ratio) | 48.45 |
| | Carbon black | 12.79 |
| **O** | Iso-octyl Acrylate | 65.39 |
| | Isobornyl Acrylate | 9.23 |
| | Acrylic Acid | 2.30 |
| | Foral 85 | 23.08 |
| **P** | Iso-octyl Acrylate | 66.67 |
| | Isobornyl Acrylate | 14.16 |
| | Acrylic Acid | 2.50 |
| | Foral 85 | 16.67 |

Compositions A, B, D, E, F, G, H, I, O and P are comparative examples.

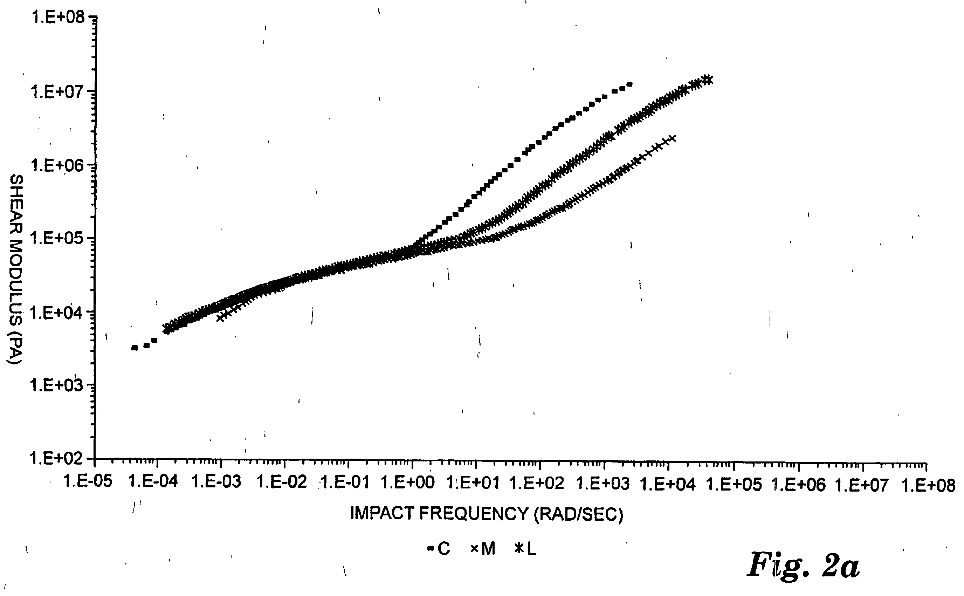

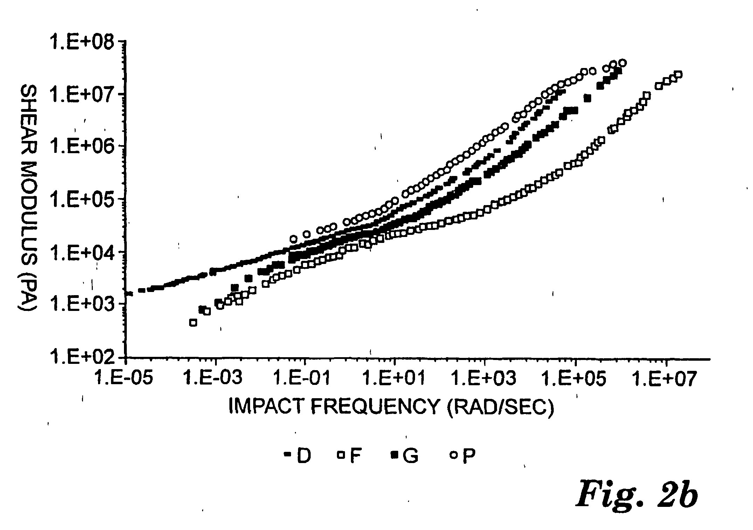

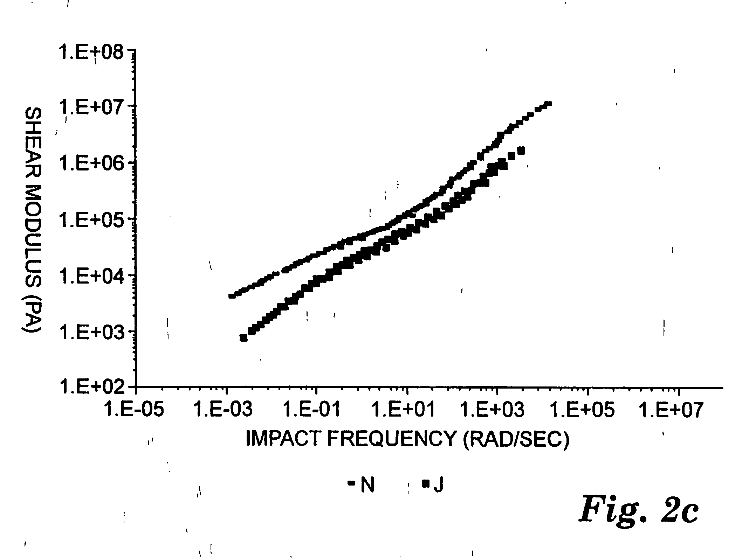

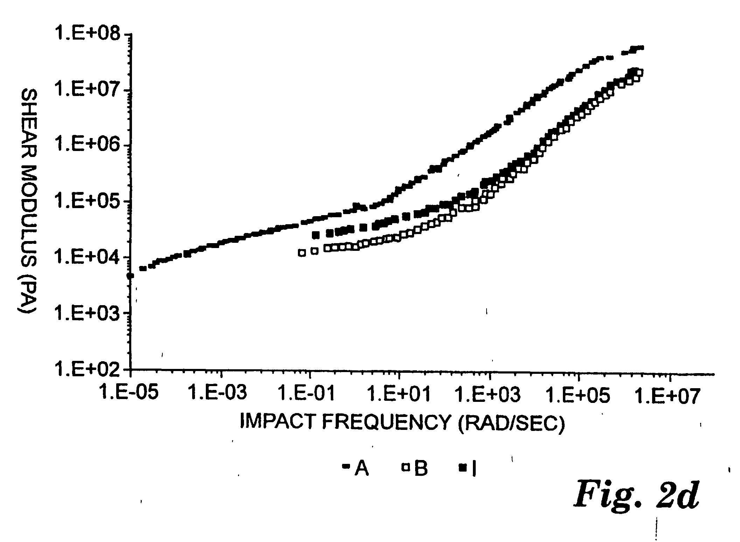

The shear modulus master curves for selected adhesives are found in FIGS. 2a to 2d. FIG. 2a shows curves for representative formulations based on natural rubber, FIG. 2b shows curves for formulations based on acrylates; FIG. 2c shows curves for formulations based on poly-α-olefins; FIG. 2d shows curves for representative polybutadiene containing formulations.

## Claims

1. A raised pavement marker that comprises:
(a) a pavement marker body having upper and lower surfaces and an apparent flexural modulus of at least about 3.45 x 10⁸ Pa (50,000 psi) and
(b) a pressure sensitive adhesive layer disposed upon the lower surface of the marker, wherein the adhesive has:
(i) a transition region that begins at a frequency of about 10,000 radians/s or more and extends to a frequency of about 100 radians/s or less at about 25 ° C; and
(ii) a minimum shear modulus of about 1 x 10⁵ Pa at an impact frequency of about 100 radians/s at 25 °C; and
(iii) a shear modulus value of about 1 x 10⁴ to 2 x 10⁵ Pa at a frequency of 1 rad/sec at 25 °C,
<-> wherein the pressure sensitive adhesive comprises:
(i) about 40 to 60 wt-% polybutadiene; and
(ii) about 40 to 60 wt-% tackifier; or :
wherein the pressure sensitive adhesive comprises:
(i) about 40 to 60 wt-% natural rubber; and
(ii) about 40 to 60 wt-% tackifier.

2. The raised pavement marker of claim 1 further comprising a conformance layer.

3. The raised pavement marker of claim 2 wherein the conformance layer has a tensile yield point of about 13 to 30 N.

4. The raised pavement marker of claim 1 wherein the adhesive comprises about 32 wt% polybutadiene; about 8 wt-% of a styrene/butadiene copolymer; about 40 wt% of an α-pinene tackifier and about 10 wt-% of a hydrocarbon tackifier.

5. The raised pavement marker of claim 1 wherein the adhesive comprises about 45 wt-% natural rubber and about 55 wt-% β-pinene tackifier.

6. The raised pavement marker of claims 1 to 5, wherein the marker is a multi-component marker.

7. The raised pavement marker of claims 1 to 5, wherein the marker is a one-piece, molded marker.

8. The raised pavement marker of claims 1 to 7, wherein the pressure sensitive adhesive has a shear modulus of about 2 x 10⁴ to 1 x 10⁵ Pa at a frequency of 1 rad/sec at 25 °C.

9. The raised pavement marker of claims 1 to 8, wherein the pressure sensitive adhesive has a shear modulus of about 2 x 10⁵ Pa or greater at a frequency of 100 rad/sec at 25 °C.

10. The raised pavement marker of claims 1 to 9, wherein the pressure sensitive adhesive has a shear modulus of about 5 x 10⁵ Pa or greater at a frequency of 100 rad/sec at 25 °C.

11. The raised pavement marker of claims 1 to 10, wherein the pressure sensitive adhesive has a shear modulus of about 2 x 10⁵ to 5 x 10⁷ Pa at a frequency of 100 to 1000 rad/sec at 25 °C.

## Patentansprüche

1. Erhöhte Straßenbelagsmarkierung, die umfasst:
a) einen Straßenbelagsmarkierungskorpus, der obere und untere Oberflächen sowie einen scheinbaren Biegemodul von mindestens ungefähr 3,45·10⁸ Pa (50.000 psi) aufweist, und
b) eine Haftklebstoffschicht, die auf der unteren Oberfläche der Markierung angeordnet ist, wobei der Klebstoff aufweist:
i) eine Übergangsregion, die bei ungefähr 25 °C bei einer Frequenz von ungefähr 10.000 rad/s oder mehr beginnt und sich bis zu einer Frequenz von ungefähr 100 rad/s oder weniger erstreckt; und
ii) einen minimalen Schermodul von ungefähr 1·10⁵ Pa bei einer Stoßfrequenz von ungefähr 100 rad/s bei 25 °C; und
iii) einen Schermodulwert von ungefähr 1·10⁴ bis 2·10⁵ Pa bei einer Frequenz von 1 rad/s bei 25 °C,
wobei der Haftklebstoff umfasst:
i) ungefähr 40 bis 60 Gew.-% Polybutadien und
ii) ungefähr 40 bis 60 Gew.-% Klebrigmacher, oder wobei der Haftklebstoff umfasst:
i) ungefähr 40 bis 60 Gew.-% Naturkautschuk; und
ii) ungefähr 40 bis 60 Gew.-% Klebrigmacher.

2. Erhöhte Straßenbelagsmarkierung nach Anspruch 1, die ferner eine Anpassungsschicht umfasst.

3. Erhöhte Straßenbelagsmarkierung nach Anspruch 2, wobei die Anpassungsschicht eine Streckgrenze von ungefähr 13 bis 30 N aufweist.

4. Erhöhte Straßenbelagsmarkierung nach Anspruch 1, wobei der Klebstoff ungefähr 32 Gew.-% Polybutadien, ungefähr 8 Gew.-% eines StyrolButadien-Copolymers, ungefähr 40 Gew.-% eines α-Pinen-Klebrigmachers und ungefähr 10 Gew.-% eines Kohlenwasserstoff-Klebrigmachers umfasst.

5. Erhöhte Straßenbelagsmarkierung nach Anspruch 1, wobei der Klebstoff ungefähr 45 Gew.-% Naturkautschuk und ungefähr 55 Gew.-% β-Pinen-Klebrigmacher umfasst.

6. Erhöhte Straßenbelagsmarkierung nach den Ansprüchen 1 bis 5, wobei die Markierung eine mehrkomponentige Markierung ist.

7. Erhöhte Straßenbelagsmarkierung nach den Ansprüchen 1 bis 5, wobei die Markierung eine einstückige geformte Markierung ist.

8. Erhöhte Straßenbelagsmarkierung nach den Ansprüchen 1 bis 7, wobei der Haftklebstoff bei 25 °C bei einer Frequenz von 1 rad/s einen Schermodul von ungefähr 2·10⁴ bis 1·10⁵ Pa aufweist.

9. Erhöhte Straßenbelagsmarkierung nach den Ansprüchen 1 bis 8, wobei der Haftklebstoff bei 25 °C bei einer Frequenz von 100 rad/s einen Schermodul von ungefähr 2·10⁵ Pa oder mehr aufweist.

10. Erhöhte Straßenbelagsmarkierung nach den Ansprüchen 1 bis 9, wobei der Haftklebstoff bei 25 °C bei einer Frequenz von 100 rad/s einen Schermodul von ungefähr 5.10⁵ Pa oder mehr aufweist.

11. Erhöhte Straßenbelagsmarkierung nach den Ansprüchen 1 bis 10, wobei der Haftklebstoff bei 25 °C bei einer Frequenz von 100 bis 1000 rad/s einen Schermodul von ungefähr 2·10⁵ Pa bis 5·10⁷ Pa aufweist.

## Revendications

1. Marquage de revêtement de la chaussée profilé, qui comprend :
(a) un corps de marquage de revêtement de la chaussée qui présente une surface supérieure et une surface inférieure et un module de flexion apparent d'au moins environ 3,45 x 10⁸ Pa (50 000 psi) et
(b) une couche d'adhésif sensible à la pression disposée sur la surface inférieure du marquage, l'adhésif présentant :
(i) une zone de transition qui commence à une fréquence d'environ 10 000 radians/s ou davantage et qui s'étend jusqu'à une fréquence d'environ 100 radians/s ou moins à environ 25°C et
(ii) un module minimum de cisaillement d'environ 1 x 10⁵ Pa à une fréquence d'impact d'environ 100 radians/s à 25°C et
(iii) un module de cisaillement dont la valeur est d'environ 1 x 10⁴ à 2 x 10⁵ Pa à une fréquence de 1 rad/s à 25°C, l'adhésif sensible à la pression comprenant :
(i) environ 40 à 60 % en poids de polybutadiène et
(ii) environ 40 à 60 % en poids d'agent d'adhérence au contact
ou l'adhésif sensible à la pression comprenant :
(i) environ 40 à 60 % en poids de caoutchouc naturel et
(ii) environ 40 à 60 % en poids d'agent d'adhérence au contact.

2. Marquage de revêtement de la chaussée profilé selon la revendication 1, qui comprend en outre une couche déformable.

3. Marquage de revêtement de la chaussée profilé selon la revendication 2, dans lequel la couche déformable a un point de déformation en traction d'environ 13 à 30 N.

4. Marquage de revêtement de la chaussée profilé selon la revendication 1, dans lequel l'adhésif comprend environ 32 % en poids de polybutadiène, environ 8 % en poids d'un copolymère de styrène et de butadiène, environ 40 % en poids d'un agent d'adhérence au contact à base d'α-pinène et environ 10 % en poids d'un agent d'adhérence au contact à base d'hydrocarbure.

5. Marquage de revêtement de la chaussée profilé selon la revendication 1, dans lequel l'adhésif comprend environ 45 % en poids de caoutchouc naturel et environ 55 % en poids d'agent d'adhérence au contact à base de β-pinène.

6. Marquage de revêtement de la chaussée profilé selon les revendications 1 à 5, dans lequel le marquage est un marquage à plusieurs composants.

7. Marquage de revêtement de la chaussée profilé selon les revendications 1 à 5, dans lequel le marquage est un marquage moulé en une pièce.

8. Marquage de revêtement de la chaussée profilé selon les revendications 1 à 7, dans lequel l'adhésif sensible à la pression à un module de cisaillement d'environ 2 x 10⁴ à 1 x 10⁵ Pa à une fréquence de 1 rad/s à 25°C.

9. Marquage de revêtement de la chaussée profilé selon les revendications 1 à 8, dans lequel l'adhésif sensible à la pression a un module de cisaillement d'environ 2 x 10⁵ Pa ou plus à une fréquence de 100 rad/s à 25°C.

10. Marquage de revêtement de la chaussée profilé selon les revendications 1 à 9, dans lequel l'adhésif sensible à la pression a un module de cisaillement d'environ 5 x 10⁵ Pa ou plus à une fréquence de 100 rad/s à 25°C.

11. Marquage de revêtement de la chaussée profilé selon les revendications 1 à 10, dans lequel l'adhésif sensible à la pression a un module de cisaillement d'environ 2 x 10⁵ à 5 x 10⁷ Pa à une fréquence de 100 à 1 000 rad/s à 25°C.
